Europäisches Patentamt

European Patent Office

Office européen des brevets

(11) Veröffentlichungsnummer: **0 468 332 A1**

## (12) EUROPÄISCHE PATENTANMELDUNG

(21) Anmeldenummer: **91111752.1**

(22) Anmeldetag: **15.07.91**

(51) Int. Cl.⁵: **B29C 45/20**, B29C 45/74,
//B29K105:24

(30) Priorität: **14.07.90 DE 4022507**

(43) Veröffentlichungstag der Anmeldung:
**29.01.92 Patentblatt 92/05**

(84) Benannte Vertragsstaaten:
**ES FR GB IT**

(71) Anmelder: **Krauss-Maffei Aktiengesellschaft**
**Krauss-Maffei-Strasse 2**
**W-8000 München 50(DE)**

Anmelder: **HERFURTH GMBH**

**Beerenweg 6 - 8**
**W-2000 Hamburg 50(DE)**

(72) Erfinder: **Brams, Peter, Ing. grad.**
**Waldmeisterstrasse 44a**
**W-8000 München 45(DE)**
Erfinder: **Knobbe, Karl-Heinz**
**Am Teich 7**
**W 2087 Ellerbek(DE)**
Erfinder: **Hoberg, Hans-Georg**
**Rutschbahn 40**
**W 2000 Hamburg 13(DE)**

(54) **Spritzkopf für eine Kunststoff-Spritzgiessmaschine.**

(57) Um einen Spritzkopf für eine Kunststoff-Spritzgießmaschine mittels Hochfrequenz während des Ausspritzens zu erwärmen, ist der Spritzkanal als Schlitz 6 ausgebildet, bei dem die gegenüberliegenden Wände als Hochfrequenzelektroden ausgebildet sind, an die die beiden Pole einer Hochfrequenzquelle angeschlossen sind und die hindurchströmende Kunststoffmasse 3 dielektrisch erwärmt wird. Hierdurch wird bei gleichem Strömungsvolumen mit einer niedrigeren Spannung der gleiche Leistungs- bzw. Energieeintrag erzielt.

In vorteilhafter Weise ist der Spritzkanal als ringförmiger Schlitz 6 ausgebildet, indem ein Rohr 1 die eine Elektrode und ein isoliert in diesem Rohr aufgehängter Innenleiter 5 die andere Elektrode eines Hochfrequenzkondensators bildet.

EP 0 468 332 A1

Die Erfindung bezieht sich auf einen Spritzkopf für eine Kunststoff-Spritzgießmaschine mit Elektroden zur hochfrequenten Erwärmung während des Ausspritzens, insbesondere für thermisch aushärtbare Kunststoffe.

Es ist bekannt, thermisch aushärtbare Kunststoffe vor dem Verpressen mit Hochfrequenzenergie vorzuwärmen. Der Vorteil ist, daß bei diesem Verfahren, - im Gegensatz zu anderen Erwärmungsverfahren -, das gesamte Volumen des Kunststoffes gleichmäßig warm wird. Je höher die Temperatur gewählt wird, umso geringer ist die Aushärtezeit in der Preßform.

Es sind Verfahren bekannt, bei denen in Tablettenform vorgepreßte Masse in ein Hochfrequenzfeld gebracht wird, und diese Masse nach dem Erwärmen in die eigentliche Preßform transferiert wird. Auch Behälter, in denen die Masse pulverförmig eingefüllt ist, können mit Hochfrequenzenergie erwärmt werden. Wichtig dabei ist immer, daß das hochfrequente elektrische Feld so homogen auf die Masse einwirkt, daß eine gleichmäßige Erwärmung stattfindet.

Es ist auch bekannt, daß man die Kunststoffmasse während des Einspritzens in die Form erwärmen kann. Das erfordert jedoch eine hohe spezifische Leistung, da die Spritzgeschwindigkeit relativ hoch ist, denn es kommt darauf an, eine Spritzform schnell zu füllen.

Die in der Masse umgesetzte Leistung und damit die Erwärmungsgeschwindigkeit hängt von den Faktoren folgender Formel ab:

$P = E^2 \times f \times 2$

Darin sind:  P = spezifische Leistung

E = Elektrische Feldstärke

f = Frequenz

tan  = Verlustfaktor

= relative Dielektrizitätskonstante

Daraus ist zu sehen, daß alle Faktoren bis auf E linear zur Leistungserhöhung beitragen. tan und sind Materialfaktoren. Diese sind zwar auch in gewissem Rahmen beeinflußbar, sind aber meist gegeben.

Für eine Hochfrequenzerwärmung sind also die Frequenz und die Feldstärke beeinflußbar. Beide Werte finden ihre Grenzen in der Hantierbarkeit. Die Frequenz ist begrenzt durch die Eindringtiefe, die Wellenlänge und die Produzierbarkeit. Die Feldstärke findet ihre Grenze in der Spannungsfestigkeit des Materials und der Applikationselektrode.

Es gibt eine Reihe von Frequenzen im Hochfrequenzbereich, die als sogenannte ISM-Frequenz für die industrielle Nutzung frei sind. Eine der interessantesten Frequenzen ist 27.12 MHz. Will man mit dieser Frequenz z.B. Polyesterharz innerhalb 6 sek. um 60° K erwärmen bei einem Volumen von angenommen 6 kg, so würde man in einem Isolierrohr von ca. 50 mm Durchmesser und außen angelegten Elektroden an diesen Elektroden eine Hochfrequenzspannung von ca. 35 KV benötigen, die nur mit sehr großem Aufwand zu beherrschen ist. Die genannte Lösung, die Masse in einem Isolier-Rohr zu erwärmen, ist allgemein bekannt.

Der Erfindung liegt die Aufgabe zugrunde, eine Elektrodenanordnung zu finden, mit der bei gleichem Strömungsvolumen mit einer niedrigeren Spannung der gleiche Leistungs- bzw. Energieeintrag erzielt wird.

Diese Aufgabe wird gemäß den Merkmalen des Patentanspruchs 1 gelöst.

Bei der Überlegung, die Elektrodenspannung auf ein hantierbares Maß zu bringen, galt es, den Abstand der Elektroden so gering wie möglich zu machen. Dies führte zu der Lösung einer schlitzförmigen Elektrodenanordnung.

In vorteilhafter Ausbildung der Erfindung ist der Spritzkanal als ringförmiger Schlitz ausgebildet, indem ein Rohr die eine Elektrode und ein isoliert in diesem Rohr aufgehängter Innenleiter die andere Elektrode eines Hochfrequenzkondensators bildet. Bei einer derartigen Anordnung der Elektroden und der Heizelemente ist eine hohe Stabilität bei relativ geringer Dicke der stützenden Wand gewährleistet. Wenn die Kunststoff- masse durch diesen Schlitz strömt, muß dieser, um eine ausreichende Verweilzeit im Hochfrequenzfeld zu erreichen, entsprechend tief ausge- führt sein. Dies führt zu einer koaxialen Anordnung der Elektroden. Dazu ist die Elektrode als Rohr ausgeführt, welches gleichzeitig die äußere elektrische Abschirmung des Elektrodensystems darstellt. In diesem Rohr ist die zweite Elektrode rotationssymetrisch

2

aufgehängt, so daß sich ein ringförmiger Schlitz entsprechender Tiefe ergibt. Diese Innenelektrode ist z.B. in der Mitte isoliert aufgehängt, wobei eine Kontaktzuführung durch den äußeren Zylinder hindurch als Hochfrequenzanschluß ausgeführt ist.

Wird zwischen Außenrohr und Innenelektrode ein Hochfrequenzfeld wirksam, so wird die Masse, welche sich durch den Schlitz bewegt, dielektrisch erwärmt.

Die Abstützung der zentralen Elektrode erfolgt durch eine Anordnung von Isolierringen, die auch gleichzeitig Dichtungsfunktionen haben. Damit die zu erwärmende Masse ohne nennenswerte Behinderung durch diese Stützelemente strömen kann, sind diese strömungsgünstig geformt. Außerdem ist das Anström- und Abströmende der zentralen Elektrode strömungsgünstig geformt.

Weitere vorteilhafte Ausbildungen der Erfindung ergeben sich aus den Unteransprüchen.

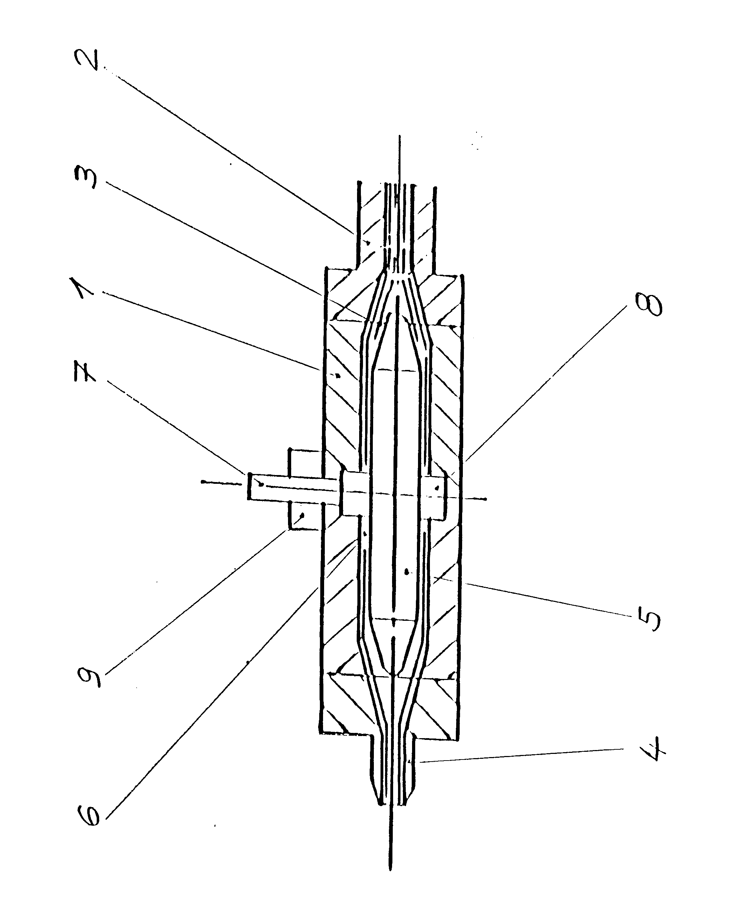

In der Zeichnung ist ein Ausführungsbeispiel der Erfindung dargestellt.

Ein Rohr 1 als äußere Elektrode ist an einem Ende mit einer Zuleitung 2 für eine Kunststoffmasse 3 und am anderen Ende mit einer Spritzdüse 4 versehen. In dem Rohr 1 ist ein zylindrischer Innenleiter 5 als innere Elektrode isoliert aufgehängt, so daß zwischen diesem und dem als Außenleiter dienenden Rohr 1 ein ringförmiger Schlitz 6 gebildet wird, der als Spritzkanal dient. Der Innenleiter 5 ist als an beiden Enden konisch zulaufender Strömungskörper ausgebildet und mit einer Stromzuführung 7 und einem Isolierteil 8 versehen. Die Stromzuführung 7 ist gegen die äußere Elektrode bzw. das Rohr 1 durch eine Buchse 9 isoliert.

## Patentansprüche

1. Spritzkopf für eine Kunststoff-Spritzgießmaschine mit Elektroden zur hochfrequenten Erwärmung während des Ausspritzens, insbesondere für thermisch aushärtbare Kunststoffe, **dadurch gekennzeichnet**, daß der Spritzkanal als Schlitz (6) ausgebildet ist, bei dem die gegenüberliegenden Wände als Hochfrequenzelektroden ausgebildet sind, an die die beiden Pole einer Hochfrequenzquelle angeschlossen sind und die hindurchströmende Kunststoffmasse (3) dielektrisch erwärmt wird.

2. Spritzkopf nach Anspruch 1, **dadurch gekennzeichnet**, daß der Spritzkanal als ringförmiger Schlitz (6) ausgebildet ist, derart, daß ein Rohr (1) die eine Elektrode und ein isoliert in diesem Rohr aufgehängter Innenleiter (5) die andere Elektrode eines Hochfrequenzkondensators bildet.

3. Spritzkopf nach Anspruch 2, **dadurch gekennzeichnet**, daß der Innenleiter (5) in der Mitte aufgehängt ist.

4. Spritzkopf nach Anspruch 2, **dadurch gekennzeichnet**, daß der Innenleiter (5) in Längsrichtung mehrfach abgestützt ist.

5. Spritzkopf nach Anspruch 2, **dadurch gekennzeichnet**, daß der Innenleiter (5) an beiden Enden im Durchmesser verjüngt ist.

6. Spritzkopf nach Anspruch 2, **dadurch gekennzeichnet**, daß das Rohr (1) teilbar ist.

7. Spritzkopf nach Anspruch 1 und 2, **dadurch gekennzeichnet**, daß beide Elektroden zur besseren Leitfähigkeit verkupfert oder versilbert sind.

8. Spritzkopf nach Anspruch 1 und 2, **dadurch gekennzeichnet**, daß die Elektroden an den Berührungsflächen mit der Kunststoffmasse mit einer gegen Abrieb stabilen Schicht, wie z.B. Emaille, überzogen sind.

9. Spritzkopf nach Anspruch 1 und 2, **dadurch gekennzeichnet**, daß die Isolierung der Elektroden aus einem Isolierstoff mit geringen dielektrischen Verlusten und hoher Festigkeit ausgeführt ist.

10. Spritzkopf nach Anspruch 1 und 2, **dadurch gekennzeichnet**, daß die Isolierschicht zur Kunststoffmasse hin aus einem besonders abriebfesten Isolierstoff besteht.

11. Spritzkopf nach Anspruch 1 und 2, **dadurch gekennzeichnet**, daß die Hochfrequenz den Elektroden im Gegentakt zugeführt wird.

**12.** Spritzkopf nach Anspruch 1 und 2, **dadurch gekennzeichnet**, daß die Hochfrequenzzuführung koaxial erfolgt.

**13.** Spritzkopf nach Anspruch 1 und 2, **dadurch gekennzeichnet**, daß der Hochfrequenzgenerator direkt an den Spritzkopf angeflanscht ist.

**14.** Spritzkopf nach Anspruch 1 und 2, **dadurch gekennzeichnet**, daß die Hochfrequenzernergie dem Volumenstrom der durchgepreßten Masse angepaßt ist.

**15.** Spritzkopf nach Anspruuch 1 und 2, **dadurch gekennzeichnet**, daß zur Vermeidung von Spannungs-überschlägen eine Widerstandsmessung mit Abschaltsteuerung zwischen den Elektroden vorgesehen ist.

Europäisches
Patentamt

# EUROPÄISCHER RECHERCHENBERICHT

## EINSCHLÄGIGE DOKUMENTE

EP 91111752.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - A1 - 2 352 050 (LÜSEBRINK) * Gesamt * ---- | | B 29 C 45/20 B 29 C 45/74// //B 29 K 105:24 |

| RECHERCHIERTE SACHGEBIETE (Int. Cl.⁵) |
|---|
| B 29 C |

Der vorliegende Recherchenbericht wurde für alle Patentansprüche erstellt.

| Recherchenort | Abschlußdatum der Recherche | Prüfer |
|---|---|---|
| WIEN | 15-11-1991 | MAYER |

EPA Form 1503 03 82